# EUROPÄISCHE PATENTSCHRIFT

(11) **EP 0 921 373 B1**
(45) Veröffentlichungstag und Bekanntmachung des Hinweises auf die Patenterteilung: **22.11.2006**
(21) Anmeldenummer: 98122618.6
(22) Anmeldetag: 27.11.1998
(51) Int. Cl.: G01B 17/00, G10K 11/24

(54) **Lagerung für Wellenleiter zur Fortleitung mechanischer Wellen**
Support for a waveguide conducting mechanical waves
Support pour un guide d' ondes mécaniques

(30) Priorität: 03.12.1997 DE 19753805
(43) Veröffentlichungstag der Anmeldung: 09.06.1999
(73) Patentinhaber: ASM Automation Sensorik Messtechnik GmbH, 85452 Moosinning (DE)
(72) Erfinder: Steinich, Klaus-Manfred, 85604 Poering (DE)
(74) Vertreter: Strych, Werner Maximilian Josef

(56) Entgegenhaltungen:
- WO-A-96/35923
- DE-A- 2 541 243
- DE-A- 3 343 310
- US-A- 3 898 555
- US-A- 4 450 376

## Beschreibung

Die Erfindung betrifft eine Lagerung von Wellenleitern, die der Fortleitung mechanischer Wellen dienen, und insbesondere eine Lagerung zur Anwendung in Positionssensoren, die nach dem Laufzeitprinzip mechanischer Wellen arbeiten. Des weiteren betrifft die Erfindung ein Verfahren zur Herstellung solcher Lagerungen.

Positionssensoren, basierend auf dem Prinzip der Laufzeitmessung mechanischer Wellen in einem metallischen Wellenleiter, bestehen meist aus einem langgestreckten gehäusegebenden Körper aus nicht magnetischem Material oder Kunststoff zur Aufnahme und Lagerung des mechanischen Wellenleiters. Der Wellenleiter zur Fortleitung mechanischer Wellen besteht in der Regel aus einem dünnwandigen Rohr, einem Draht oder aus einem Band. Der Wellenleiter kann auch als elektrischer Leiter dienen.

Basierend auf dem Wiedemann-Effekt erzeugt ein in den Wellenleiter eingespeister Erregerstromimpuls bei seiner Überlagerung mit einem insbesondere lateral auf den Wellenleiter gerichteten externen Magnetfeld einen Longitudinal- oder Torsionsimpuls. Der durch die Überlagerung der beiden Magnetfelder erzeugte Torsions- und/oder Longitudinalimpuls breitet sich etwa mit 2.500 bis 6.000 m/s vom Ort der Entstehung in beide Richtungen entlang des Wellenleiters aus.

Der Wellenimpuls wird an einer Referenzposition, üblicherweise an einem Ende des Wellenleiters, von einem Detektor erfaßt. Die Zeitdauer zwischen der Auslösung des Erregerstromimpulses und dem Empfang des Wellenimpulses ist dabei ein Maß für den Abstand eines verschiebbaren Positionsmagneten vom Detektor.

Eine typische Meßanordnung, basierend auf dem Laufzeitprinzip mechanischer Wellen, ist im US-Patent Nr. 3,898,555 gezeigt.

Es ist bekannt, den Wellenleiter innerhalb des Gehäuses zu lagern und dadurch gegen äußere mechanische Störungen zu schützen. Mechanische Störungen, wie z. B. Körperschall, Schock oder Vibration können in der Positionssensoranordnung Störsignale auslösen, die sich mit dem Nutzsignal überlagern und von diesem nicht zu unterscheiden sind. Folglich ergeben sich Fehlmessungen und das Positionsmeßsystem arbeitet nicht zuverlässig.

In verschiedenen bekannten Positionsmeßsystemen hat man versucht, den Wellenleiter mit einzelnen beabstandeten Lagerelementen zu lagern. Diese Lagerelemente bestehen meist aus Kunststoff und haben Scheiben- oder Konusformen. Diese sind jedoch aufwendig herzustellen und müssen umständlich und zeitraubend auf den Wellenleiter aufgefädelt werden.

Derartige Lagerelemente sind aus der DE 33 43 310 bekannt. Ein magnetostriktives Rohr wird dort in geeigneten Abständen mit Hilfe von Stützringen abgestützt, die eine relativ enge Mittelöffnung aufweisen, die von dem Rohr mit geringem Spiel durchlaufen wird, und die gleichzeitig ringförmige Schultern definieren, die der Abstützung von Teilstücken eines Schutzrohres dienen, welches das magnetostriktive Rohr umgibt.

Eine ähnliche Lagerung ist aus dem US-Patent Nr. 3,898,555 bekannt, die aus mehreren Ringen besteht, welche entlang des Wellenleiters angeordnet sind. Auch diese Lösung ist aufgrund der schwierigen Handhabung der Lagerelemente unbefriedigend.

Eine optimale Lagerung soll einerseits den Wellenleiter gegen externe Störungen möglichst gut schützen und andererseits die ohnehin schwachen Torsions- oder Longitudinalimpulse so gering wie möglich dämpfen.

In dem US Patent mit der Nummer 4,450,376 wird eine Lagerung für Wellenleiter offenbart, die der Fortleitung mechanischer Wellen dienen. Der streifenförmige Wellenleiter ist von einem akustischen Absorber aus einem dichten Kunststoffisolator umgeben, der die Kanten des Wellenleiters bedeckt. Der Wellenleiter wird hierbei durch einen inneren Kern aus aufgeschäumten Kunststoff von den Hauptflächen des Isolators beabstandet gehalten.

Im Patent PCT-WO 96/35923 ist eine Lagerung, bestehend aus einem Geflecht aus Glasfasern, Metall- oder Polymerfasern offenbart, die mit einer Silikongummiumhüllung beschichtet ist. Zur Lagerung wird der Wellenleiter in den zweischichtigen Hohlzylinder eingezogen, der eine laterale Bewegung des Wellenleiters verhindert und den Wellenleiter vor Vibrationen und externen Störungen schützt, wobei er den Wellenleiter nicht so stark einengt, daß die ohnehin schwachen mechanischen Wellen gedämpft werden.

Diese Lösung zeichnet sich zwar durch eine hohe Temperaturbeständigkeit aus und reduziert gegenüber früheren Lösungen den Fertigungsaufwand zur Herstellung und Montage einer Lagerung, zeigt aber mehrere gravierende Nachteile, die sich negativ auf die Funktion des Positionsmeßsystems auswirken.

Aufgrund der relativ hohen Materialdichte des Glasfasergeflechts und des darauf aufgebrachten Silikongummis können durch externe Anregung Schwingungen auf den Wellenleiter übertragen werden und zu einer Störauslösung führen. Durch die hohe Materialdichte der äußeren Silikonschicht wird dieser Effekt sogar noch begünstigt.

Ein weiterer Nachteil besteht darin, daß sich der Gewebeschlauch leicht strecken oder stauchen läßt, wodurch sich die geometrischen Abmessungen, insbesondere der Durchmesser, verändern. Die geforderte gleichmäßige Führung des Wellenleiters innerhalb der Lagerung ist somit nicht möglich und das relativ harte Material (Glasfaser) der inneren Schicht kann im Falle von externen Schwingungen oder Vibrationen auf den Wellenleiter aufschlagen und zu Störsignalen führen.

Der so konstruierte Lagerschlauch hat aufgrund seines flexiblen Materials nur eine geringe Formhaltigkeit. Das in diesem Patent beschriebene Geflecht aus Gewebeschlauch mit Silikonüberzug ist naturgemäß hoch flexibel und deshalb nicht zur mechanischen Stützung eines Wellenleiters geeignet.

Es ist daher die Aufgabe der vorliegenden Erfindung, eine Lagerung für Wellenleiter zur Fortleitung mechanischer Wellen zu schaffen, die einerseits den Wellenleiter gegen äußere Vibrationen oder andere externe Störungen schützt und andererseits Torsions- oder Longitudinalimpulse, die sich auf dem Wellenleiter ausbreiten, so gering wie möglich dämpft.

Des weiteren ist es die Aufgabe der vorliegenden Erfindung, ein Verfahren zur Herstellung einer Lagerung für Wellenleiter, die der Fortleitung mechanischer Wellen dienen, vorzuschlagen.

Gelöst wird diese Aufgabe gemäß der Erfindung durch die in den unabhängigen Ansprüchen angegebenen Merkmale. Zweckmäßige Ausgestaltungen der Erfindung ergeben sich aus den abhängigen Ansprüchen.

Es wurde insbesondere erkannt, daß eine Lagerung für Wellenleiter, bestehend aus einer Struktur mit einem hohen Anteil Gas, insbesondere Luft oder Treibgas, wie z. B. Stickstoff, und einem niedrigen Anteil Feststoff, wesentlich bessere Lagereigenschaften, d.h. vor allem eine wesentlich geringere Dämpfung der mechanischen Wellen, die sich auf dem Wellenleiter ausbreiten, aufweist.

Aufgrund seiner relativ niedrigen Materialdichte wird eine zellförmige bzw. schaumförmig strukturierte Lagerung mit hohem Anteil an Gas und niedrigem Anteil an Feststoff als besonders geeignet verwendet.

Eine derartige Struktur kann eine einstückige schlauchförmige, insbesondere hohlzylinderförmige Lagerung sein, die einen im Inneren des Hohlzylinders z. B. koaxial verlaufenden Wellenleiter gegen äußere Störungen schützt und lagert. Diese Lagerung hat insbesondere den Vorteil, daß der Wellenleiter in einem Arbeitsschritt einfach in den Hohlzylinder eingeführt werden kann.

Darüber hinaus kann die Lagerung mehrere, entlang des Wellenleiters beabstandete Lagerelemente, wie z. B ringförmige Stege, enthalten, so daß der Wellenleiter in den Zwischenräumen von Gas umgeben ist, das bekanntlich eine noch geringere Dämpfungswirkung auf den Wellenleiter ausübt als es mit jedem Feststoff möglich ist.

Über die Gesamtlänge des Wellenleiters betrachtet wird durch eine Verschmälerung der Lagerelemente bzw. die Vergrößerung der dazwischenliegenden, mit Gas gefüllten Bereiche, eine Struktur mit einem noch höheren Anteil Gas und einem noch niedrigeren Anteil an Feststoff geschaffen. Die Verschmälerung der Lagerelemente wird vor allem durch eine Reduktion der Auflagefläche zwischen Wellenleiter und Lagerung erreicht.

Im dämpfungstechnisch günstigsten Fall umfaßt die Lagerung mehrere, entlang des Wellenleiters beabstandete Stege geringer Breite, die den insbesondere zentral geführten Wellenleiter auf einer möglichst kleinen Auflagefläche berühren.

Die vorzugsweise elektrisch isolierende, vorzugsweise elastische Lagerung kann aus einem besonders leichten Material, wie z. B. Kunststoff, hergestellt sein. Dies führt zu einer Reduktion der spezifischen Dichte der Lagerung und wirkt sich somit günstig auf die Störanfälligkeit der Positionssensoranordnung aus. Die relativ geringe Masse der Lagerung entwickelt bei externen Störungen, wie z. B. Körperschall, Schock und Vibration, weniger Bewegungsenergie und schlägt erst bei größeren mechanischen Einwirkungen als herkömmliche Lagerungen auf den Wellenleiter auf, wodurch ein Störsignal erzeugt werden kann.

Die Struktur kann offenporig oder geschlossenporig sein, wobei Strukturen, die durch Strecken, Schäumen, Vernetzen, etc. zum Einschluß von Gasanteilen und damit zu geringer Wellenabsorption führen, geeignet sind. Eine Lagerung mit hohem Anteil an Gas und niedrigem Anteil an Feststoff, die z. B. aus den vorstehend genannten Stoffen besteht, wird im folgenden als "zellförmig strukturiert" bezeichnet.

Wenn die Struktur darüber hinaus selbsttragend, d. h. selbständig mechanisch stützend ist, muß keine weitere Umhüllung, wie z. B. ein Mantel oder ein Rohr vorhanden sein, welches die Lagerung nach außen hin abstützt, sondern kann ohne weitere Maßnahmen unmittelbar als selbsttragende Struktur eingesetzt werden.

Als Feststoff für die Lagerung kommen vor allem Kunststoffe, wie z. B. fluorhaltige Polymerisate, aber auch alle elektrisch gut isolierenden Stoffe mit kleiner Dielektrizitätskonstante in Frage. Dazu gehören z. B. geschäumte Polymere und Elastomere, Glasschaum, Glaskugeln, vernetzte, gestreckte Materialien oder Verbundstoffe aus diesen Materialien.

In den oben genannten Ausführungsformen wird der Wellenleiter wenigstens teilweise von der Lagerung berührt und mechanisch gestützt.

Eine weitere Verringerung der Auflagefläche zwischen dem Wellenleiter und der Lagerung kann erreicht werden, wenn der Wellenleiter z. B. von einer spiralförmigen Lagerung umgeben ist.

Es hat sich gezeigt, daß insbesondere bandförmige und drahtförmige Lagerungen, die z. B. auch mit Fußen oder Noppen versehen sein können, geeignet sind, die dem Wellenleiter ausreichend mechanischen Halt bieten und insbesondere eine laterale Bewegung des Wellenleiters verhindern. Als Material für die spiralförmige Lagerung sind ebenfalls zellförmig strukturierte Stoffe geeignet.

Um die spiralförmige Lagerung herum kann eine weitere Lagerung, z. B. eine zellförmig strukturierte hohlzylinderförmige Lagerung, vorgesehen sein, welche die Kombination aus Wellenleiter und spiralförmiger Lagerung wenigstens über einen Teil des Umfangs umschließt.

Positionssensoren, basierend auf dem Prinzip der Laufzeitmessung mechanischer Wellen in einem metallischen Wellenleiter, umfassen neben dem Wellenleiter, der selbst auch elektrisch leitend sein kann, einen äußeren rohrförmigen, drahtförmigen oder bandförmigen Rückleiter, der den Erregerkreis des Positionssensors schließt.

Im Falle eines rohrförmigen elektrischen Rückleiters, der den Wellenleiter vorzugsweise koaxial umschließt, ist eine elektrisch isolierende Lagerung zwischen dem Wellenleiter und dem umgebenden Rückleiter vorgesehen. Der elektrische Rückleiter kann z. B. aus einem Draht- oder Bandgeflecht, einem Rohr oder aus einer Folie bestehen.

Im Falle eines drahtförmigen elektrischen Rückleiters kann der Rückleiter in der Struktur der Lagerung eingebettet sein.

Die Formhaltigkeit der Lagerung kann außerdem durch formstabilisierende Mittel, insbesondere Fasern, verstärkt sein. Als Faserwerkstoff ist z. B. Glas-, Karbon, Keflar-, Aramidfaser etc. geeignet.

Eine derartig verstärkte Lagerung muß insbesondere nicht zusätzlich in eine mechanisch stützende weitere Umhüllung (Rohr, Mantel o. dgl) eingebracht werden, sondern kann ohne weitere Maßnahmen, direkt verlegt werden. Einfache Befestigungsmittel sind z. B. Klipse oder Schellen, insbesondere aus Isolierstoff oder nicht magnetischem Material.

Neben ihrer Funktion als mechanische Lagerung und elektrische Isolation kann die Lagerung gleichzeitig auch als Dämpfungselement an den Enden des Wellenleiters dienen.

Ähnlich wie bei der Reflexion optischer Wellen bei einem Übergang von einem optisch dichteren in ein optisch dünneres Medium werden auch an den Enden des Wellenleiters mechanische Wellen reflektiert. Die entstehenden Reflexionen können sich mit dem Nutzsignal überlagern und zu Fehlmessungen führen. Dies ist insbesondere störend bei kurzen Meßfolgen bzw. bei periodischer Anregung des Wellenleiters mit schnellen Impulsfolgen.

Unterschiedliche Methoden zur Dämpfung sind bekannt. Häufig wird ein Dämpfungselement aus Silikongummi auf die Wellenleiterenden aufgebracht bzw. aufgeklemmt, um die unerwünschten Reflexionen zu dämpfen. Dabei ist es erforderlich, daß die Dämpfungszonen eine möglichst geringe räumliche Erstreckung haben, damit auch im Endbereich der Meßanordnung, wie z. B. bei einem Füllstandsanzeiger in der Nähe des Bodens eines Gefäßes, verläßlich und genau gemessen werden kann.

Zur Dämpfung unerwünschter Reflexionen von mechanischen Wellen an den freien Enden des Wellenleiters kann die Lagerung in diesem Bereich eine höhere Dämpfungswirkung aufweisen. Eine hohe Dämpfungswirkung kann insbesondere durch ein weiches Material mit hoher Dichte erzielt werden, das den Wellenleiter allseitig fest umschließt.

Die zellförmig strukturierte Lagerung wird dazu vorzugsweise im Bereich der Enden des Wellenleiters, insbesondere am freien Ende des Wellenleiters, verdichtet. Dazu kann z. B. eine Preßhülse in an sich bekannter Weise aufgesetzt und durch geeignete Werkzeuge auf den Wellenleiter aufgepreßt werden.

Neben der mechanischen Reduktion bzw. Verdichtung kann die Lagerung z. B. auch durch thermische Verdichtung oder eine Kombination aus beiden Verfahren dauerhaft komprimiert werden.

Dabei kann gleichzeitig auch die elektrische Kontaktierung des elektrisch leitenden Wellenleiters mit dem koaxialen oder biaxialen elektrischen Rückleiter durchgeführt werden. Es wird also gleichzeitig der dauerhafte Schluß des elektrischen Stromkreises und die dauerhafte Komprimierung des den Wellenleiter umschließenden Lagers bewirkt, wodurch ein mit der Lagerung einstückig gebildetes Dämpfungselement im Endbereich des Wellenleiters entsteht.

Ein positiver Nebeneffekt der thermisch schmelzenden Verdichtung der Lagerung ist, daß gleichzeitig das Ende des Wellenleiters, und insbesondere die elektrische Verbindung zwischen innerem und äußeren Leiter, vor Umwelteinflüssen geschützt und durch schmelzende, verdichtete Kunststoffmasse hermetisch abgedichtet ist.

Eine andere Ausführungsform sieht das Aufbringen einer Dichtkappe aus schmelzend verdichtetem und/oder verklebendem Kunststoff vor, die auf ein Ende des Wellenleiters aufgebracht wird.

Zur weiteren Verbesserung der mechanischen Isolierung gegenüber von außen einwirkenden mechanischen oder akustischen Störungen kann um den koaxialen, rohrförmigen, metallischen Rückleiter herum eine weitere äußere Isolierung aufgebaut sein, die vorzugsweise auch elektrisch isoliert. Eine zusätzlich anbringbare Schicht aus demselben oder einem anderen Material dient schließlich dem Schutz gegen Verschleiß und Abrasion.

Die äußeren Umhüllungen können sich wie die innere Lagerung ebenfalls durch ein hohes Gas-/Feststoffverhältnis auszeichnen.

Die zellförmig strukturierte, den Umfang des Wellenleiters wenigstens teilweise umgebende Lagerung klebt bei allen Ausführungsformen nicht auf dem Wellenleiter, sondern gestattet eine Bewegung zwischen Wellenleiter und Lagerung in axialer Richtung. Diese ist jedoch vorzugsweise auf ein Minimum reduziert.

Mit einem rohrförmigen, den Wellenleiter vollständig umschließenden Rückleiter ist gleichzeitig eine magnetische und elektromagnetische Schirmung zu erreichen, wenn für den Rückleiter ein Material gewählt wird, welches neben einer magnetischen Permeabilität genügend elektrische Leitfähigkeit besitzt, wie z. B. eine Folienbandagierung aus sehr dünner, insbesondere µ-Metallfolie.

Die Permeabilität und Materialdicke des abschirmenden Rückleiters sind so aufeinander abzustimmen, daß das Feld des positionsgebenden Verschiebemagneten noch genügend Wirkung (magnetischen Durchgriff) hat, um einen magnetostriktiven Effekt auszulösen, der zur Erzeugung einer mechanischen Longitudinal- oder Torsionswelle führt.

Ein besonders einfaches Verfahren zur Herstellung einer Lagerung für Wellenleiter zur Fortleitung mechanischer Wellen ist nachfolgend beschrieben.

Zunächst wird eine Lagerung in einer oben genannten Ausführungsform aus einer Seele aus preisgünstigem Material, einer sog. "Hilfsseele", gefertigt, welche später in einem weiteren Arbeitsgang gegen den eigentlichen Wellenleiter ausgetauscht wird.

Als "Hilfsseele" kann prinzipiell jedes beliebige Material verwendet werden, das sich gut aus der Lagerung entfernen läßt und sich nicht zu stark dehnt oder reißt. Ein elastisches Material, das beim insbesondere axialen Ausziehen der "Hilfsseele" durch Strecken eine Durchmesserreduzierung erfährt, erleichtert das Ausziehen der "Hilfsseele" deutlich.

Vor dem Ausziehen wird ein Ende der Hilfsseele mit dem eigentlichen Wellenleiter, insbesondere mittels einer Klemm- oder Klebeverbindung, verbunden. Die Hilfsseele wird dann herausgezogen, wodurch gleichzeitig der Wellenleiter mit eingezogen wird.

Der Wellenleiter sollte einen geringfügig kleineren Durchmesser aufweisen als die herauszuziehende "Hilfsseele" der vorgefertigten Anordnung, so daß vorzugsweise ein leichter Gleitsitz zwischen Wellenleiter und Lagerung besteht.

Besonders preisgünstig ist die Verwendung eines herkömmlichen Koaxialkabels, das z. B. bei Fernsehantennen Einsatz findet, mit einem Innenleiter, einem koaxialen rohrförmigen Außenleiter und einen dazwischenliegenden isolierenden Dielektrikum.

Zur Verwendung des Koaxialkabels für eine Wellenleiteranordnung wird der äußere elektrisch und mechanisch isolierende Mantel, der den koaxialen rohrförmigen Rückleiter umschließt, wenigstens teilweise abgemantelt, wobei der Innenleiter insbesondere mittels des oben beschriebenen Verfahrens wie eine Hilfsseele durch einen Wellenleiter ersetzt wird. Das Dielektrikum des herkömmlichen Koaxialkabels dient dabei als Lagerung für den Wellenleiter, wogegen der koaxiale Außenleiter (Schirm) als Rückleiter im Erregerkreis eines Positionssensors dient.

Am Ende des Wellenleiters kann das abgemantelte Koaxialkabel, wie oben beschrieben, z. B. konzentrisch, mechanisch reduzierend verdichtet werden. Dadurch wird ein Dämpfungselement geschaffen, das unerwünschte Reflexionen von mechanischen Wellen am freien Ende des Wellenleiters dämpft.

Die Erfindung wird nachstehend anhand der Fig. 1 bis 11 beispielhaft näher erläutert. Es zeigen
- Fig. 1a, b:: mehrere Ansichten einfacher Grundausführungen einer Wellenleiteranordnung mit einer erfindungsgemäßen Lagerung;
- Fig. 2:: mehrere Ansichten einer zweiten Ausführungsform einer Wellenleiteranordnung mit einer erfindungsgemäßen Lagerung;
- Fig. 3:: mehrere Ansichten einer dritten Ausführungsform einer Wellenleiteranordnung mit einer erfindungsgemäßen Lagerung;
- Fig. 4:: mehrere Ansichten einer vierten Ausführungsform einer Wellenieiteranordnung mit einer erfindungsgemäßen Lagerung;
- Fig. 5:: mehrere Ansichten einer fünften Ausführungsform einer Wellenleiteranordnung mit einer erfindungsgemäßen Lagerung;
- Fig. 6:: mehrere Ansichten einer sechsten Ausführungsform einer Wellenleiteranordnung mit einer erfindungsgemäßen Lagerung;
- Fig. 7:: mehrere Ansichten einer siebten Ausführungsform einer Wellenleiteranordnung mit einer erfindungsgemäßen Lagerung und einem Tragseil;
- Fig. 8:: mehrere Ansichten einer achten Ausführungsform einer Wellenleiteranordnung mit einer erfindungsgemäßen Lagerung und Hilfsleitern;
- Fig. 9: eine Ansicht einer neunten Ausführungsform einer Wellenleiteranordnung mit einer erfindungsgemäßen Lagerung mit Stegen;
- Fig. 10:: mehrere Ansichten einer zehnten Ausführungsform einer Wellenleiteranordnung mit eingebettetem Rückleiter;
- Fig. 11a, b:: Ansichten zur Erläuterung der Herstellung einer Preßhülse am freien Ende des Wellenleiters.

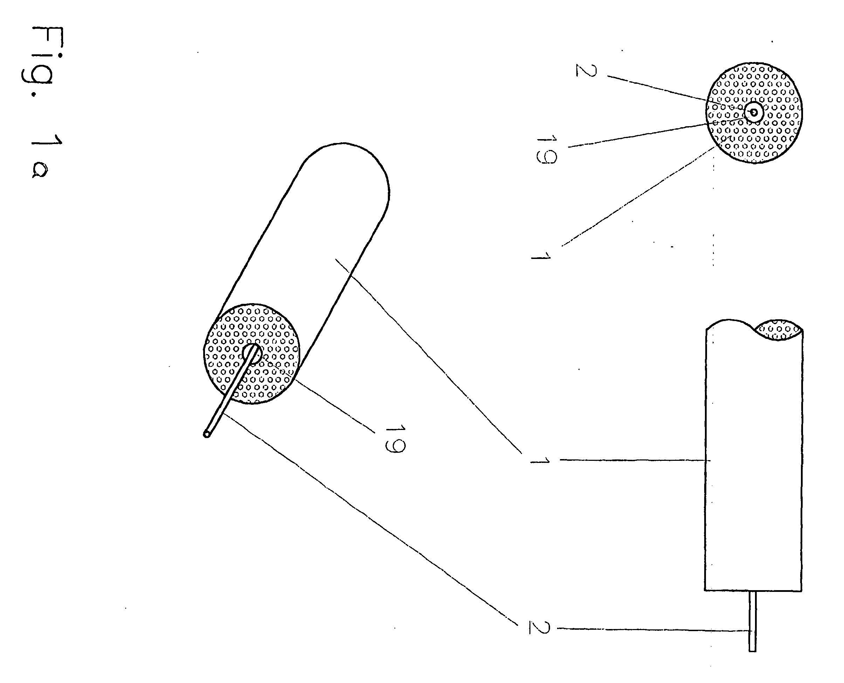

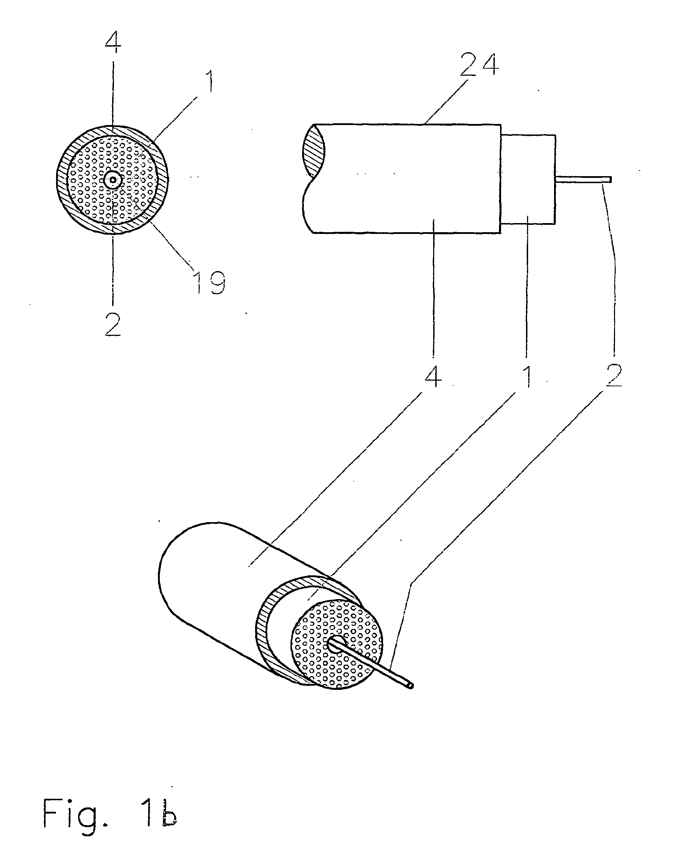

Die Fig. 1a und 1b zeigen einfache Grundausführungen einer Wellenleiteranordnung für mechanische Wellen mit einer hohlzylinderförmigen Lagerung 1 und einem Wellenleiter 2, wobei als Wellenleiter 2 alle bekannten Wellenleitertypen, insbesondere rohrförmige, drahtförmige, bandförmige oder litzenförmig verseilte Wellenleiter verwendet werden können. In Fig. 1b ist die Lagerung 1 der Wellenleiteranordnung zusätzlich von einem koaxialen Rückleiter 4 umgeben.

Bei diesen Ausführungsformen wird der Wellenleiter 2 in einem zylinderförmigen Innenraum 19 der Lagerung 1 geführt und dabei mechanisch gestützt, ohne dabei zu stark eingeengt und auf Druck beansprucht zu werden, so daß mechanische Wellen, die sich auf dem Wellenleiter 2 ausbreiten, nur geringfügig gedämpft werden.

Die hohlzylinderförmige Lagerung 1 ist zellförmig strukturiert, d.h., sie besteht aus einem hohen Anteil Gas und aus einem geringen Anteil Feststoff, wie z. B. aus geschäumtem Kunststoff.

Als Lagerung 1 sind alle elektrisch gut isolierenden Stoffe, wie z. B. Polymere, Elastomere, Glasschaum, vernetzte Materialien oder Verbundstoffe mit diesen Materialien geeignet.

Die Struktur der Lagerung kann offenporig oder geschlossenporig sein und ferner formstabilisierende Mittel, wie z. B. Faserwerkstoffe enthalten, welche der Reduzierung der mechanischen Längendehnung bei Temperatureinfluß dienen.

Der in Fig. 1b dargestellte koaxiale Rückleiter 4 hat eine glatte Oberfläche 24, die aber auch gewellt sein kann. Andere geeignete Rückleiter bestehen aus einem Draht- oder Bandgeflecht bzw. können mittels einer Folie realisiert werden, die koaxial oder biaxial streifenförmig auf die Lagerung 1 aufgebracht ist.

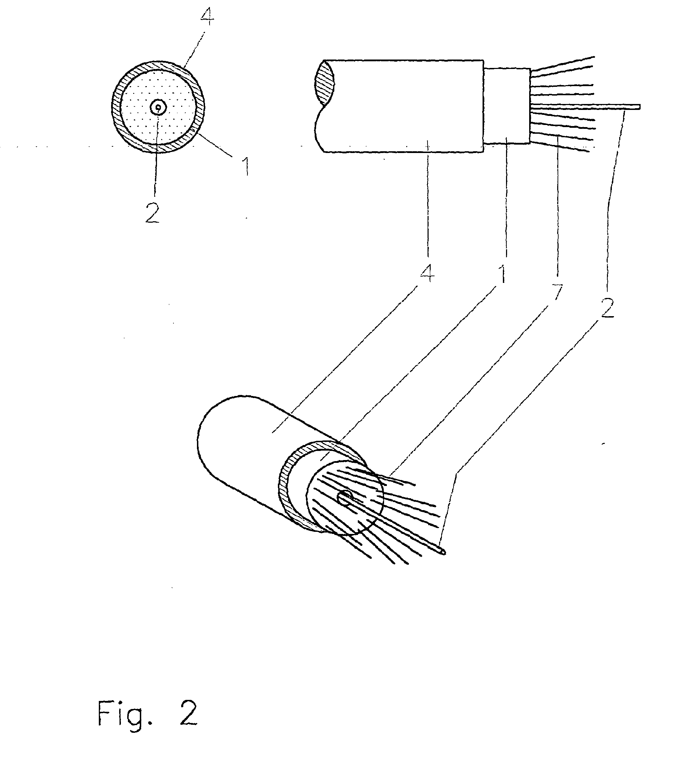

Fig. 2 zeigt eine ähnliche koaxiale Wellenleiteranordnung wie Fig. 1b, mit einem koaxialen elektrischen Rückleiter 4, bei der die Lagerung 1 mit einem insbesondere axial verlaufenden Faserwerkstoff 7 verstärkt ist.

In Fig. 2 sind die Fasern 7 im zellförmigen Isolierstoff der Lagerung 1 eingebettet, können jedoch auch an der Oberfläche der Lagerung 1 angeordnet sein. Als Fasern sind vor allem Glas-, Karbon, Keflar-, Aramidfasern oder andere Fasern einsetzbar.

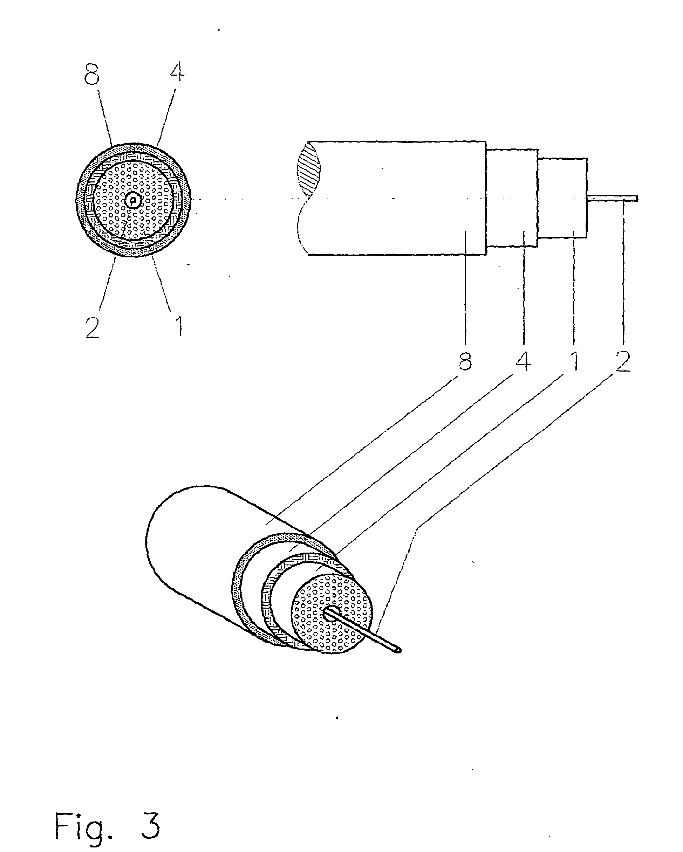

Fig. 3 zeigt die Wellenleiteranordnung der Figuren 1 oder 2, die zusätzlich mit einem Isolierstoffmantel 8 ummantelt ist, der aus dem gleichen Material wie die Lagerung 1 bestehen kann, d. h vorzugsweise aus Kunststoff, wie z. B. Polymer oder Elastomer, aber in dichterer Form, z.B. ohne oder mit weniger Poren.

Der die Lagerung 1 umschließende Isolierstoffmantel 8 dient einerseits der elektrischen Isolierung zwischen Wellenleiter 2 und koaxialem Rückleiter 4 und andererseits der mechanischen Isolierung gegenüber von außen einwirkenden mechanischen oder akustischen Störungen.

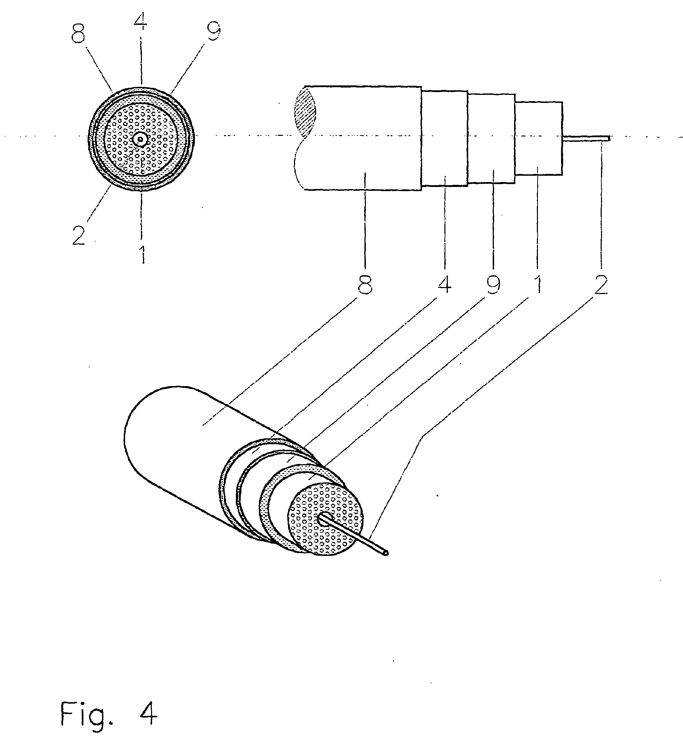

Die in Fig. 4 gezeigte Wellenleiteranordnung sieht eine Rückleiterfolie 9 vor, die zwischen der Lagerung 1 und dem koaxialen Rückleiter 4 angeordnet ist. Der äußere Isolierstoffmantel 8 ähnelt von der Materialbeschaffenheit der inneren Isolierung 1 und zeichnet sich ebenfalls durch ein möglichst hohes Gas-/Feststoffverhältnis aus. Der äußere Isolierstoffmantel 8 ist hier ebenfalls aus geschäumtem, zellförmigem, isolierendem Material gefertigt.

Es ist vorteilhaft, für den äußeren Isolierstoffmantel ein geschlossenporiges Material bzw. ein Material mit geschlossener Außenhaut zu verwenden, z. B. in der Art von PU-Integralschaum, um gleichzeitig einen Schutz gegen Verschleiß und Abrasion zu erzielen.

Sowohl für die Lagerung 1 als auch für den Isolierstoffmantel 8 einsetzbare Kunststoffmaterialien sind aus der Gruppe der Polymere z. B. FEP (Fluorethylencopolymer), PTFE (Polytetrafluorethylen), PVC (Polyvinylchlorid), PA (Polyamid), PE (Polyethylen), PP (Polypropylen) oder SPE (geschäumtes Polyethylen) und aus der Gruppe der Elastomere z. B. SR (Silicongummi), PU (Polyurethan) etc..

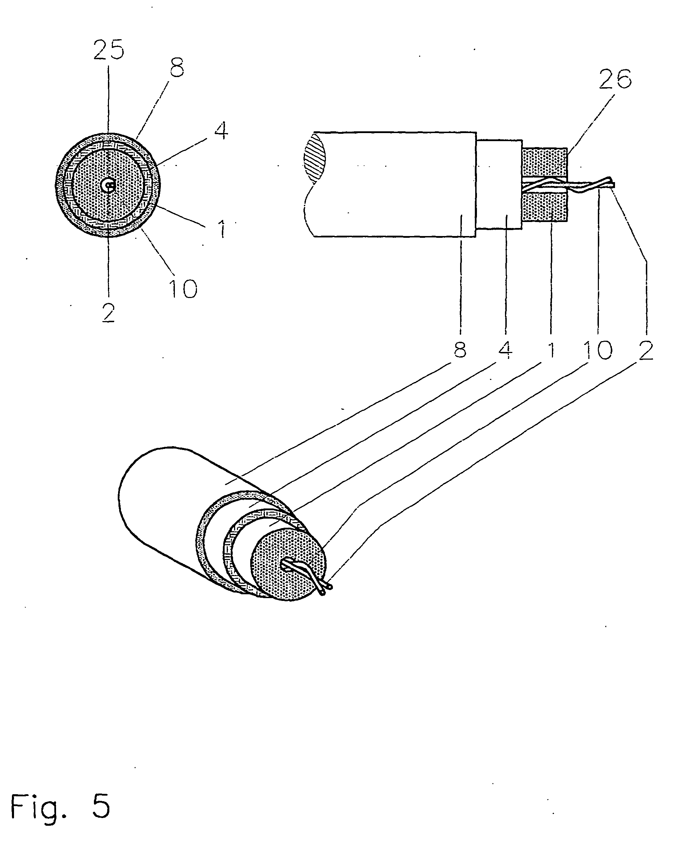

Fig. 5 zeigt eine Wellenleiteranordnung mit einem koaxialen Rückleiter 4, mit einer hohlzylinderförmigen Lagerung 1 für einen Wellenleiter 2, und einem Isolierstoffmantel 8. Diese Elemente entsprechen denen aus Figuren 4.

Bei dieser Ausführungsform ist eine drahtförmige Lagerung 10 spiralförmig um den Wellenleiter 2 gewickelt, die vorzugsweise ebenfalls aus zellförmig strukturiertem Material besteht, welches den Wellenleiter 2 stützt und im zylinderförmigen Innenraum 19 der Lagerung 1 zentriert.

Aufgrund der spiralförmigen Umwicklung des Wellenleiters 2 sind die Berührungsflächen zwischen der drahtförmigen Lagerung 10 und dem Wellenleiter 2 minimal. Die spiralförmige Umwicklung des Wellenleiters 2 ermöglicht eine weitere Reduktion der Auflagefläche zwischen Lagerung 10 und Wellenleiter 2, und damit eine niedrigere Dämpfungswirkung auf den Wellenleiter.

Die drahtförmige Lagerung 10 berührt den Innenumfang 17 der Lagerung 1 an weiteren Berührungsflächen 26. Diese können an der Lagerung 10, z. B. zur besseren Abstützung, fußförmig verbreitert sein (nicht gezeigt).

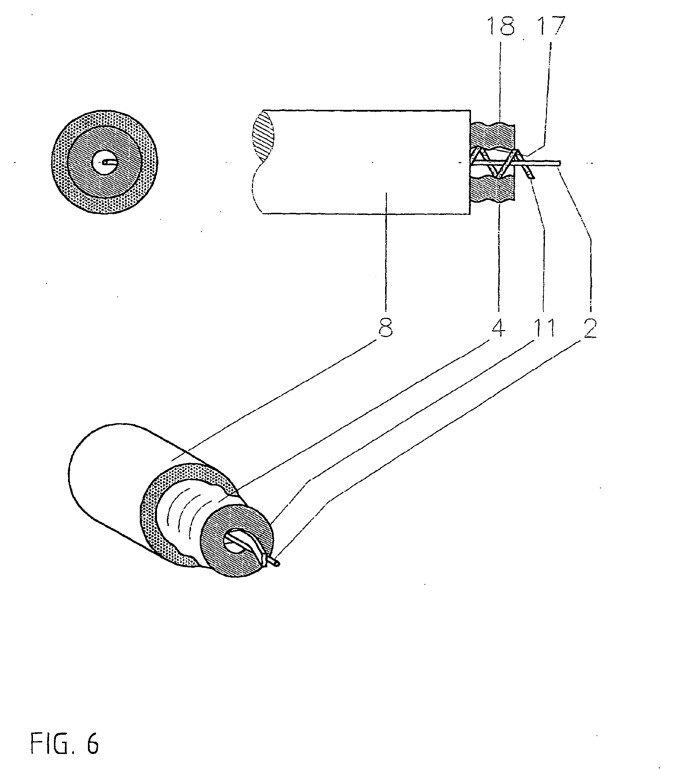

Eine andere Ausführungsform einer spiralförmigen Lagerung ist in Fig. 6 gezeigt. Auch dort ist der im Zentrum der Anordnung geführte Wellenleiter 2 von einer bandförmigen Lagerung 11 spiralförmig umgeben und wird von dieser getragen.

Die bandförmige Lagerung 11 ist hier jedoch zusammen mit dem Wellenleiter 2 im Innenraum 19 des rohrförmigen Rückleiters 4 zentrisch angeordnet. Dabei stützt sich die bandförmige Lagerung 11 am Innenumfang 17 des elektrischen Rückleiters 4 ab.

Der koaxiale Rückleiter 4 kann eine glatte Oberfläche oder, wie hier gezeigt, eine gewellte Oberfläche an seinem Innen- bzw. Außenumfang 17, 18 aufweisen. Die Wellen können durch einzelne koaxiale Einschnürungen gebildet werden, oder durch eine einzige helixförmige Einschnürung erzeugt werden. Durch diese Gestaltung läßt sich der rohrförmige, gewellte Rückleiter 4 leichter biegen und in Radien verlegen.

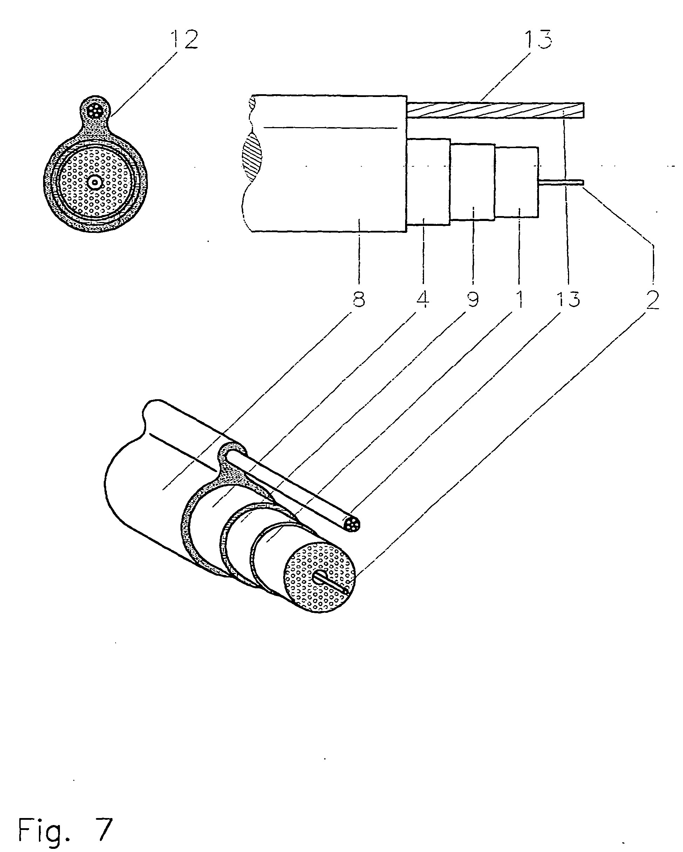

Fig. 7 zeigt eine Wellenleiteranordnung ähnlich der Anordnung in Fig. 4, mit einem Wellenleiter 2, einer Lagerung 1, einer koaxialen Rückleiterfolie 9 und einem elektrischen Rückleiter 4, der von einem Isolierstoffmantel 8 umgeben ist.

Einstückig mit dem Isolierstoffmantel 8 ist ein Fortsatz 12 gebildet, der ein Tragseil 13 aus Stahl aufnimmt. Zum Verlegen der Sensoranordnung können auch andere Befestigungsmittel, wie z. B. Stäbe aus verschiedenen Materialien, dienen.

Die Befestigungsmittel sind vorzugsweise langgestreckte, in Längsrichtung des Wellenleiters 2, d. h. parallel zum Wellenleiter 2, verlaufende Elemente, die vorzugsweise in einem Teilbereich des Isolierstoffmantels 8 angeordnet sind.

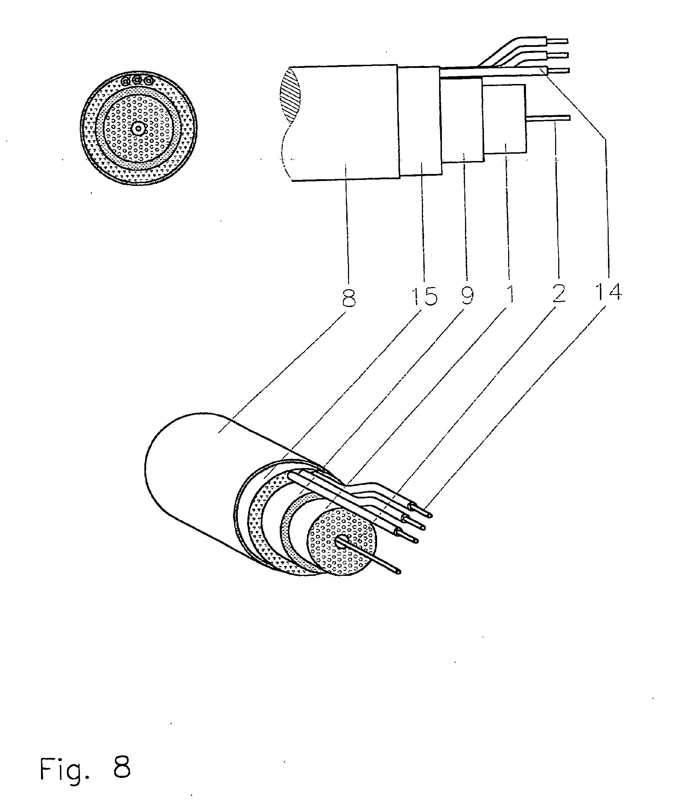

Fig. 8 zeigt eine mehrschichtige Wellenleiteranordnung, mit einem Füllmaterial 15, in dem elektrische Hilfsleiter 14 eingebettet sind.

Die koaxiale Wellenleiteranordnung umfaßt einen Wellenleiter 2, eine Lagerung 1, eine koaxiale Rückleiterfolie 9, die von dem Füllmaterial 15 koaxial umgeben ist, und einen koaxialen Isolierstoffmantel 8 (von innen nach außen).

Im Füllmaterial 15 können ein oder mehrere elektrische Hilfsleiter 14 eingebettet sein, die vorzugsweise parallel zum Wellenleiter 2 verlaufen. Durch Stromimpulse in den Hilfsleitern 14 erzeugte elektrische Felder werden in bekannter Weise durch die Koaxialleitung, bestehend aus Wellenleiter 2 und elektrischer Rückleiterfolie 9, vom Wellenleiter 2 abgeschirmt.

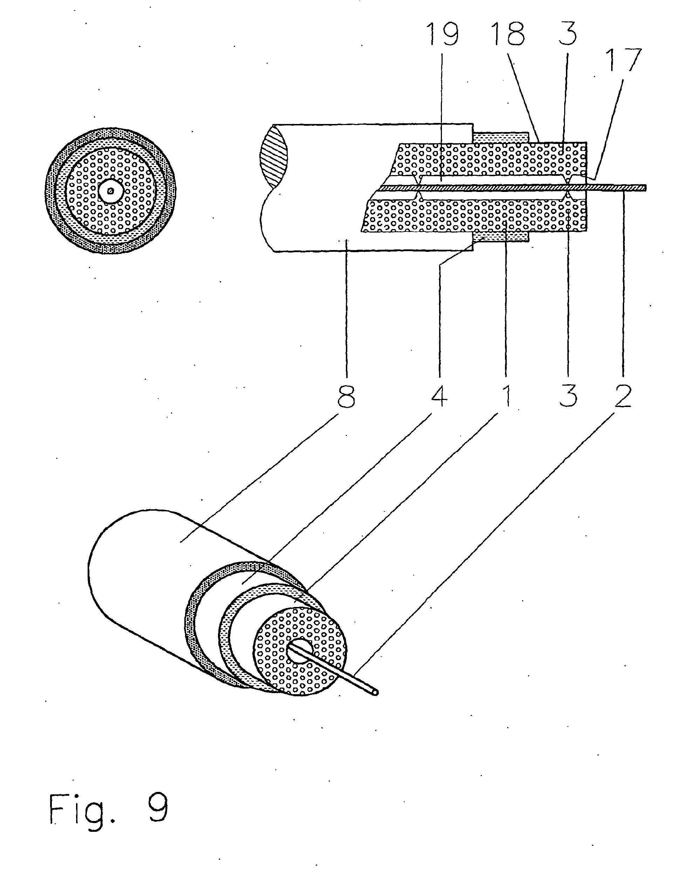

Die in Fig. 9 gezeigte Ausführungsform einer Wellenleiteranordnung mit koaxialem elektrischen Rückleiter 4 sieht vor, die koaxiale Lagerung 1 zwischen Wellenleiter 2 und dem elektrischen koaxialen Rückleiter 4 durch ringförmige Stege 3 zu schaffen, wobei die Stege 3 in möglichst großen Abständen angeordnet und eine möglichst geringe Stegbreite, d. h., eine möglichst kleine Auflagefläche auf dem Wellenleiter 2 aufweisen sollen.

Die ringförmigen Stege 3 ragen über Innenumfang 17 der Lagerung 1 wenigstens teilweise in den Innenraum 19 der Lagerung 1 hinein. Wenigstens die inneren Endbereiche der Stege 3 sind keilförmig, spitz zulaufend und derart gestaltet, daß der Wellenleiter zwar mechanisch gehalten wird, jedoch nur eine kleine berührende Auflagefläche zwischen dem Wellenleiter 2 und dem isolierenden Material der Stege 3 besteht, um eine möglichst geringe Bedämpfung der mechanischen Wellen zu bewirken und andererseits von außen auf die Anordnung einwirkenden mechanischen Störungen in Form von Vibrationen-, Stößen-, oder Schockimpulsen dämpfend entgegenzuwirken. Der Wellenleiter 2 liegt dabei nicht am Innenumfang 17 der Lagerung 1 an.

Die Stegabstände sind so gewählt, daß sich ein Durchhang zwischen den Stegen nicht störend auf die Meßgenauigkeit auswirkt.

In Fig. 9 bestehen die Stege 3 aus dem gleichen zellförmig strukturierten Material wie die Lagerung 1 und sind einstückig mit der Lagerung 1 gebildet, welche offenporig oder geschlossenporig sein kann.

Die Stege 3 sind einstückig mit der Lagerung 1 gebildet (Fig. 9).

Die Stege 3 sind vorzugsweise in rechtem Winkel zur Ausdehnungsrichtung des Wellenleiters 2 angeordnet.

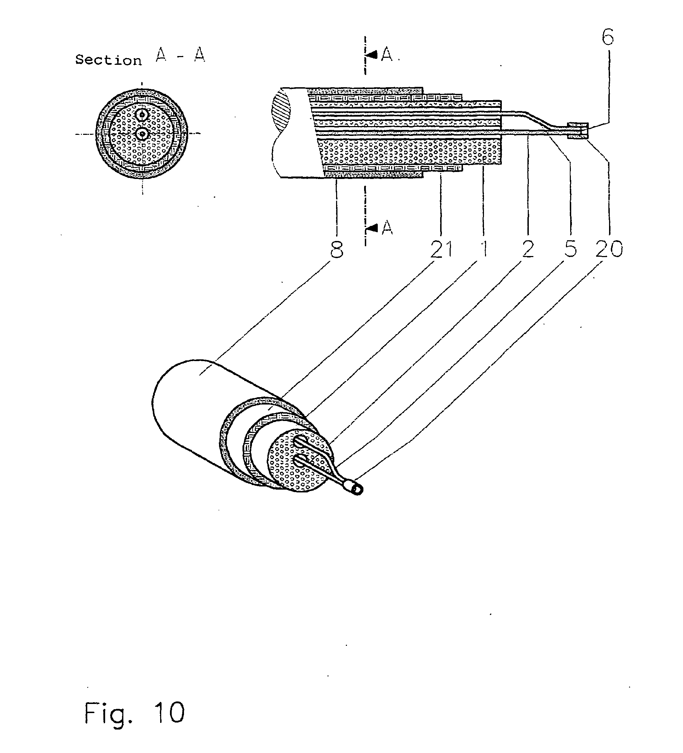

Fig. 10 zeigt eine weitere Ausführungsform einer Wellenleiteranordnung mit einem drahtförmigen elektrischen Rückleiter 5, bei der am Ende eine Hülse 20 vorgesehen ist, die vorzugsweise magnetisch und elektrisch leitfähig ist und den Wellenleiter 2 mit dem drahtförmigen elektrischen Rückleiter 5 elektrisch leitend verbindet, wobei der drahtförmige elektrische Rückleiter 5 in einem äußeren Bereich der koaxialen, hohlzylinderförmigen Lagerung 1 eingebettet ist.

Der Wellenleiter 2 ist durch einen koaxialen Schirm 21 gegen elektromagnetische Felder abgeschirmt, der ferner von einem koaxialen Isolierstoffmantel 8 elektrisch und mechanisch gegenüber von außen einwirkenden Störungen isoliert ist.

Neben der Verbindung mittels einer Klemmhülse 20 kann die elektrische Verbindung zwischen elektrischem Rückleiter 5 und dem Ende 6 des Wellenleiters 2 auch durch Löten, Schweißen, Pressen, etc. hergestellt sein.

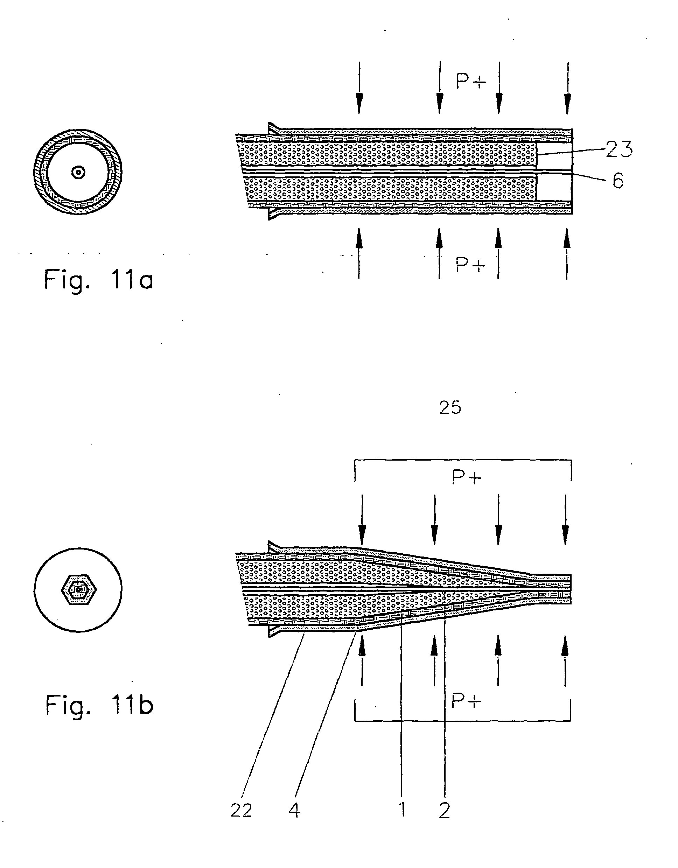

Die Fig. 11a und 11b zeigen eine Ansicht einer Wellenleiteranordnung mit einem koaxialen elektrischen Rückleiter 4 zur Erläuterung der Herstellung eines Dämpfungsbereiches bei gleichzeitiger Kontaktierung des mechanischen Wellenleiters 2 mit dem koaxialen elektrischen Rückleiter 4.

Die Wellenleiteranordnung in Fig. 11a umfaßt einen Wellenleiter 2, der zentrisch in einer hohlzylinderförmigen Lagerung 1 geführt ist axial und über eine Endfläche 23 der Lagerung 1 hinausragt.

Der koaxiale, die Lagerung 1 umgebende elektrische Rückleiter 4 und eine im Endbereich auf den Rückleiter 4 aufgebrachte Preßhülse 22 ragen etwa gleich weit wie der Wellenleiter 2 axial über die Endfläche 23 der Lagerung 1 hinaus.

Um die erforderliche Verdichtung des Isolierstoffes der Lagerung 1 zu bewirken, wird die Preßhülse 22 in bekannter Weise durch geeignete Werkzeuge konischkonzentrisch gemeinsam mit dem Isolierstoff auf den Wellenleiter 2 aufgepreßt, wodurch gleichzeitig ein Kontakt zwischen dem mechanischen Wellenleiter 2 und dem koaxialen oder biaxialen elektrischen Rückleiter 4 entsteht.

Somit wird gleichzeitig der dauerhafte Schluß des elektrischen Stromkreises und eine dauerhafte Komprimierung des den Wellenleiter 2 umschließenden Lagers 1 in dessen axialem Endbereich bewirkt.

Die Verdichtung des Lagerungsmaterials führt zu einer erhöhten dämpfenden Wirkung und unterdrückt unerwünschte Reflexionen mechanischer Wellen im Bereich des freien Endes 6 des Wellenleiters 2.

### BEZUGSZEICHENLISTE

- 1 -: Lagerung
- 2 -: Wellenleiter
- 3 -: Stege
- 4 -: Rückleiter
- 5 -: elektrischer Rückleiter
- 6 -: freies Ende
- 7 -: Faserwerkstoff
- 8 -: Isolierstoffmantel
- 9 -: Rückleiterfolie
- 10 -: drahtförmige Lagerung
- 11 -: bandförmige Lagerung
- 12 -: Fortsatz
- 13 -: Seil
- 14 -: Hilfsleiter
- 15 -: Füllmaterial
- 17 -: Innenumfang
- 18 -: Außenumfang
- 19 -: Innenraum
- 20 -: Hülse
- 21 -: Schirm
- 22 -: Preßhülse
- 23 -: Endfläche
- 24 -: Oberfläche

## Patentansprüche

1. Lagerung (1) für Wellenleiter (2), die der Fortleitung mechanischer Wellen dienen, wobei die Lagerung (1) einen hohen Anteil Gas und einen niedrigen Anteil Feststoff aufweist, indem sie zellförmig unter Einschluss von Gasanteilen strukturiert ist,
**dadurch gekennzeichnet, dass**
- die Lagerung (1) den Wellenleiter (2) vollständig umgibt,
- die Lagerung einstückig ausgebildet ist.

2. Lagerung (1) nach Anspruch 1,
**dadurch gekennzeichnet, dass**
die Lagerung (1) mehrere entlang des Wellenleiters (2) beabstandete Stege (3) umfasst, so dass der Wellenleiter (2) in den Zwischenräumen zwischen den Stegen (3) von Gas umgeben ist, wobei die Stege (3) einstückig mit der Lagerung (1) ausgebildet sind.

3. Lagerung (1) nach einem der vorhergehenden Ansprüche,
**dadurch gekennzeichnet, dass**
die Stege (3) eine möglichst kleine Auflagefläche auf dem Wellenleiter (2) haben und in möglichst großen Abständen angeordnet sind.

4. Lagerung (1) nach einem der vorhergehenden Ansprüche,
**dadurch gekennzeichnet, dass**
die Lagerung (1) eine möglichst geringe Dichte aufweist.

5. Lagerung (1) nach einem der vorhergehenden Ansprüche,
**dadurch gekennzeichnet, dass**
die Lagerung (1) selbsttragend ist.

6. Lagerung (1) nach einem der vorhergehenden Ansprüche,
**dadurch gekennzeichnet, dass**
die Lagerung (1) aus Kunststoff besteht.

7. Lagerung (1) nach einer der vorhergehenden Ansprüche,
**dadurch gekennzeichnet, dass**
die Lagerung (1) offenporig oder geschlossenporig zellförmig strukturiert ist.

8. Lagerung (1) nach einem der vorhergehenden Ansprüche,
**dadurch gekennzeichnet, dass**
die Lagerung (1) zwischen dem Wellenleiter (2) und einem koaxial um den Wellenleiter (2) angeordneten elektrischen Rückleiter (4) eines Positionssensors, der nach dem Laufzeitprinzip mechanischer Wellen arbeitet, angeordnet ist.

9. Lagerung (1) nach Anspruch 8,
**dadurch gekennzeichnet, dass**
die Lagerung (1) über die gesamte Meßlänge des Wellenleiters (2) zwischen dem Wellenleiter (2) und einem koaxial um den Wellenleiter (2) angeordneten elektrischen Rückleiter (4) eines Positionssensors, der nach dem Laufzeitprinzip mechanischer Wellen arbeitet, angeordnet ist.

10. Lagerung (1) nach einem der Ansprüche 1 bis 7,
**dadurch gekennzeichnet, dass**
ein drahtförmiger elektrischer Rückleiter (5) eines Positionssensors in die Lagerung (1) eingebettet ist.

11. Lagerung (1) nach einem der vorhergehenden Ansprüche,
**dadurch gekennzeichnet, dass**
die Lagerung (1) durch formstabilisierende Mittel, insbesondere Fasern, verstärkt ist.

12. Lagerung (1) nach einem der vorhergehenden Ansprüche,
**dadurch gekennzeichnet, dass**
die Lagerung (1) im Bereich des freien Endes (6) des Wellenleiters (2) eine höhere Dämpfungswirkung als im mittleren Bereich des Wellenleiters (2) für mechanische Wellen aufweist, die sich entlang des Wellenleiters (2) ausbreiten, um unerwünschte Reflexionen von mechanischen Wellen an den freien Enden (6) des Wellenleiters (2) zu dämpfen.

13. Lagerung (1) nach einem der vorhergehenden Ansprüche,
**dadurch gekennzeichnet, dass**
die Lagerung (1) im Bereich des freien Endes (6) des Wellenleiters (2) eine dichtere zellförmige Struktur aufweist als im Mittelbereich des Wellenleiters (2), um unerwünschte Reflexionen von mechanischen Wellen am freien Ende (6) des Wellenleiters (2) zu dämpfen.

14. Lagerung (1) nach einem der vorhergehenden Ansprüche,
**dadurch gekennzeichnet, dass**
das freie Ende (6) des Wellenleiters (2), insbesondere an der Verbindung von Wellenleiter (2) und elektrischem Rückleiter (4, 5, 9) gegen Umwelteinflüsse geschützt ist.

15. Lagerung (1) nach einem der vorangehenden Ansprüche,
**dadurch gekennzeichnet, dass**
die Lagerung (1) einen Anteil von mindestens 50 Volumen-% Gas und höchstens 50 Volumen-% Feststoff aufweist.

## Claims

1. A support arrangement (1) for wave conductors (2) for conducting mechanical waves, wherein the support arrangement in (1) comprises a high percentage of gas and a low percentage of solids, having a cell-like structure including gaseous portions,
**characterized in, that**
- the support arrangement (1) completely surrounds the wave conductor (2),
- the support consists of one single part.

2. A support arrangement (1) according to claim 1,
**characterized in, that**
the support arrangement (1) comprises several bars (3), spaced along the wave conductor (2), so that the wave conductor (2) is surrounded by gas in the gaps between the bars (3), wherein the bars (3) are integrally formed with the support arrangement (1).

3. A support arrangement (1) according to one of the preceding claims,
**characterized in, that**
the bars (3) have a minimum contact area on the wave conductor (2) and are spaced at maximum distances.

4. A support arrangement (1) according to one of the preceding claims,
**characterized in, that**
the support arrangement (1) has minimum density.

5. A support arrangement (1) according to one of the preceding claims,
**characterized in, that**
the support arrangement (1) is self-supporting.

6. A support arrangement (1) according to one of the preceding claims,
**characterized in, that**
the support arrangement (1) is made from plastic.

7. A support arrangement (1) according to one of the preceding claims,
**characterized in, that**
the support arrangement (1) is structured with open pores or cellular with closed pores.

8. A support arrangement (1) according to one of the preceding claims,
**characterized in, that**
the support arrangement (1) is located between the wave conductor (2) and a reverse electric conductor (4), coaxially located around the wave conductor (2), of a position sensor, which is operated according to the travel duration principle of mechanical waves.

9. A support arrangement (1) according to claim 8,
**characterized in, that**
the support arrangement (1) is located along the whole length of the wave conductor (2) between the wave conductor (2) and a reverse electric conductor (4), coaxially located around the wave conductor (2), of a position sensor, which is operated according to the travel duration principle of mechanical waves.

10. A support arrangement (1) according to one of the claims 1 to 7
**characterized in, that**
a wire shaped reverse electrical conductor (5) of a position sensor is embedded in the support arrangement (1).

11. A support arrangement (1) according to one of the preceding claims,
**characterized in, that**
the support arrangement (1) is reinforced through form stabilizing means, especially fibers.

12. A support arrangement (1) according to one of the preceding claims,
**characterized in, that**
the support arrangement (1), in the area of the free end (6) of the wave conductor (2), has a stronger damping effect, than in the middle area of the wave conductor (2), for mechanical waves propagating along the wave conductor (2), in order to dampen undesired reflections of mechanical waves at the free ends (6) of the wave conductor (2).

13. A support arrangement (1) according to one of the preceding claims,
**characterized in, that**
the support arrangement (1) comprises a more dense cellular structure in the area of the free end (6), compared to the middle area of the wave conductor (2), in order to dampen undesired reflections of mechanical waves at the free end (6) of the wave conductor (2).

14. A support arrangement (1) according to one of the preceding claims,
**characterized in, that**
the free end (6) of the wave conductor (2), in particular at the connection of the wave conductor (2) and the reverse electrical conductor (4, 5, 9) is protected from environmental impacts.

15. A support arrangement (1) according to one of the preceding claims,
**characterized in, that**
the support arrangement (1) comprises a portion of at least 50 volume % gas and a maximum of 50 volume % of solids.

## Revendications

1. Support (1) pour un guide d'onde (2) qui sert à l'acheminement d'ondes mécaniques, le support (1) présentant une grande part de gaz et une part plus faible de substances solides, dans le fait qu'il est structuré en forme des cellules sous inclusion de parts de gaz,
**caractérisé en ce que**
- le support (1) entoure complètement le guide d'ondes (2).
- et que le support étant réalisé d'une seule pièce.

2. Support (1) selon la revendication 1, **caractérisé en ce que** le support (1) comporte plusieurs talons (3) disposés à distance le long du guide d'ondes (2) de sorte que le guide d'ondes (2) est entouré de gaz dans les intervalles entre les talons (3), les talons (3) étant réalisés d'une seule pièce avec le support (1).

3. Support (1) selon l'une des revendications précédentes, **caractérisé en ce que** les talons (3) ont une surface d'application la plus petite possible sur le guide d'ondes (2) et sont disposés à des intervalles les plus grands possible.

4. Support (1) selon l'une des revendications précédentes, **caractérisé en ce que** le support (1) présente une densité la plus faible possible.

5. Support (1) selon l'une des revendications précédentes, **caractérisé en ce que** le support (1) est autoportant.

6. Support (1) selon l'une des revendications précédentes **caractérisé en ce que** le support (1) se compose de matière synthétique.

7. Support (1) selon l'une des revendications précédentes **caractérisé en ce que** le support (1) présente une structure cellulaire à pores ouverts ou pores fermés.

8. Support (1) selon l'une des revendications précédentes, **caractérisé en ce que** le support (1) est disposé entre le guide d'ondes (2) et un conducteur de retour électrique (4) d'un capteur de position travaillant selon le principe du temps de propagation des ondes mécaniques, le conducteur disposé coaxialement autour du guide d'ondes (2).

9. Support (1) selon la revendication 8, **caractérisé en ce que** le support (1) est disposé sur toute la longueur du guide d'ondes (2) entre le guide d'ondes (2) et un conducteur de retour électrique (4) d'un capteur de position travaillant selon le principe du temps de propagation des ondes mécaniques, le conducteur étant disposé coaxialement autour du guide d'ondes (2).

10. Support (1) selon l'une des revendications 1 à 7, **caractérisé en ce qu'**un conducteur de retour électrique (5) en forme de fil d'un capteur de position est enrobé dans le support (1).

11. Support (1) selon l'une des revendications précédentes, **caractérisé en ce que** le support (1) est renforcé par des moyens stabilisateurs de forme, en particulier des fibres.

12. Support (1) selon l'une des revendications précédentes, **caractérisé en ce que** le support (1) présente dans la zone de l'extrémité libre (6) du guide d'ondes (2) une action d'absorption plus élevée que dans la zone médiane du guide d'ondes (2) pour des ondes mécaniques qui se propagent le long du guide d'ondes (2) pour absorber des réflexions indésirables d'ondes mécaniques aux extrémités libres (6) du guide d'ondes (2).

13. Support (1) selon l'une des revendications précédentes, **caractérisé en ce que** le support (1) présente dans la zone de l'extrémité libre (6) du guide d'onde (2) une structure cellulaire plus dense que dans la zone médiane du guide d'ondes (2) pour absorber des réflexions indésirables d'ondes mécaniques à l'extrémité libre (6) du guide d'ondes (2).

14. Support (1) selon l'une des revendications précédentes, **caractérisé en ce que** l'extrémité libre (6) du guide d'onde (2) est protégée contre les influences de l'environnement en particulier à la liaison entre le guide d'ondes (2) et le conducteur de retour électrique (4, 5, 9).

15. Support (1) selon l'une des revendications précédentes, **caractérisé en ce que** le support (1) présente une part d'au moins 50 % en volume gazeux et au moins 50 % en volume de substances solides.
